# EUROPEAN PATENT APPLICATION

(11) **EP 2 243 684 A1**
(43) Date of publication of application: **27.10.2010**
(21) Application number: 10159134.5
(22) Date of filing: 06.04.2010
(51) Int. Cl.: B62B 7/08

(54) **Foldable pushcart**

(30) Priority: 21.04.2009 JP 2009102975
(71) Applicant: Aprica Children's Products Inc., Chuo-ku, Osaka-shi Osaka 542-0082 (JP)
(72) Inventor: Ohnishi, Ichiro, Osaka-shi Osaka 542-0082 (JP)
(74) Representative: Prüfer & Partner GbR European Patent Attorneys

(57) **Abstract**

A foldable pushcart includes: a pair of first vertical frame members 4, 4 extending vertically and parallel to each other on a back side of the pushcart; a first cross member 8 including two bar members 81, 82, which cross each other in an X shape, and which have their respective upper ends slidably supported by the pair of first vertical frame members, respectively, and have their respective lower ends pivotally coupled to the pair of first vertical frame members, respectively; a first link member 13 having its one end pivotally coupled to one of the two bar members of the first cross member; a second link member 12 having its one end pivotally coupled to the other bar member of the first cross member, and having the other end pivotally coupled to the other end of the first link member; a first open-state lock mechanism 30 for fixing a crossing angle between the two bar members of the first cross member by inhibiting bending between the first link member and the second link member; and a second open-state lock mechanism 40 for fixing a crossing angle between the first link member and one of the two bar members of the first cross member.

## Description

### BACKGROUND OF THE INVENTION

### Field of the Invention

The present invention generally relates to pushcarts, and more particularly to foldable pushcarts that are reduced in size in longitudinal (front-back) and width directions when folded. Note that, as used herein, the term "pushcart" is used in a broad sense to include baby carriages, load-carrying carts, and the like.

### Description of the Background Art

A baby carriage that is reduced in size in height and width directions when folded is disclosed in, e.g., Japanese Utility Model Publication No. S57(1982)-111659 of unexamined applications. The baby carriage disclosed in this publication is folded so that the distance between front and rear legs in the longitudinal direction is reduced while reducing the distance between left and right front legs in the width direction, and the distance between left and right rear legs in the width direction.

The baby carriage disclosed in the above publication has a back cross member for coupling the pair of rear legs, as a basic component. The back cross member includes two bar members that cross each other in an X shape. Respective upper ends of the bar members are slidably supported by the pair of rear legs, respectively, and respective lower ends of the bar members are pivotally coupled to the pair of rear legs, respectively. The baby carriage is locked in an open state by fixing the crossing angle between the two bar members of the back cross member.

The baby carriage disclosed in the above publication is kept in the open state by a double lock mechanism. A first open-state lock mechanism includes left and right link members, central lock means, and side lock means. The left and right link members are provided so as to couple respective upper parts of the two bar members of the back cross member. The central lock means is located at the joint of the left and right link members, for fixing the left and right link members in a linearly aligned state. The side lock means fixes the crossing angle between one link member and one rear leg.

In an embodiment disclosed in the above publication, the central lock means and the side lock means are structured so as to cooperate with each other, so that the side lock means is automatically unlocked by unlocking the central lock means. However, the structure of automatically unlocking the other lock means by unlocking one lock means is not preferable for safety reasons.

In order to ensure the safety, the embodiment disclosed in the above publication can be modified so that the central lock means and the side lock means do not cooperate with each other, and separate unlock operations are performed to unlock the central lock means and the side lock means. In this case, since the central lock means and the side lock means are located away from each other, the user needs to unlock the side lock means with one hand and unlock the central lock means with the other hand. Alternatively, the user needs to unlock the side lock means first, and then release his/her hand from the side lock means to unlock the central lock means with that hand. Such an unlock operation is troublesome, and a simpler unlock operation is desired.

### SUMMARY OF THE INVENTION

It is an object of the present invention to provide a foldable pushcart capable of simplifying an operation of releasing the pushcart from an open state while maintaining the safety.

According to the present invention, a foldable pushcart that is reduced in size in longitudinal and width directions when folded includes: a pair of first vertical frame members extending vertically and parallel to each other on a back side of the pushcart; a first cross member including two bar members, which cross each other in an X shape, and which have their respective upper ends slidably supported by the pair of first vertical frame members, respectively, and have their respective lower ends pivotally coupled to the pair of first vertical frame members, respectively; a first link member having its one end pivotally coupled to one of the two bar members of the first cross member; a second link member having its one end pivotally coupled to the other bar member of the first cross member, and having the other end pivotally coupled to the other end of the first link member; a first open-state lock mechanism for fixing a crossing angle between the two bar members of the first cross member by inhibiting bending between the first link member and the second link member; and a second open-state lock mechanism for fixing a crossing angle between the first link member and one of the two bar members of the first cross member.

According to the invention having the above structure, since the first open-state lock mechanism and the second open-state lock mechanism are located close to each other, respective unlock operations for both lock mechanisms can be performed with one hand.

In one embodiment, the second open-state lock mechanism includes a latch pin fixed to one of the two bar members of the first cross member, and a hook pivotally supported by the first link member, and having a latch recess that can latch onto the latch pin. Preferably, the foldable pushcart further includes biasing means for biasing the hook in such a direction that engages the hook with the latch pin.

In a preferred embodiment, the hook is pivotally supported by the first link member via a shaft. The hook includes an outer part that extends from the shaft toward the latch pin, and an inner part that extends from the shaft in a direction opposite to that of the outer part. By pressing down the inner part, the latch recess is disengaged from the latch pin, whereby the second open-state lock mechanism is unlocked.

In a preferred embodiment, the first open-state lock mechanism includes a coupling shaft for pivotally coupling the first link member and the second link member, and operation means for moving the coupling shaft vertically. The first open-state lock mechanism is locked by moving the coupling shaft downward beyond a change point where the first link member and the second link member are linearly aligned with each other, by using the operation means, and the first open-state lock mechanism is unlocked by moving the coupling shaft upward beyond the change point.

Preferably, the operation means includes a central member for holding the coupling shaft, and a grip member pivotally coupled to the central member. The hook is pivotally supported by the first link member via a shaft. The hook includes an outer part that extends from the shaft toward the latch pin, and an inner part that extends from the shaft in a direction opposite to that of the outer part. By pressing down the inner part, the latch recess is disengaged from the latch pin, whereby the second open-state lock mechanism is unlocked. The inner part of the hook and the grip member are positioned with respect to each other so that the inner part of the hook can be pressed down with a finger of a hand holding the grip member.

According to a preferred embodiment, the pushcart further includes: a pair of second vertical frame members extending vertically and parallel to each other, and pivotally coupled to respective upper parts of the pair of first vertical frame members, respectively; and a pair of side frame members extending longitudinally and parallel to each other, having their respective one ends pivotally coupled to the upper ends of the first cross member, respectively, and having the other ends pivotally coupled to the pair of second vertical frame members, respectively.

According to a more preferred embodiment, the foldable pushcart further includes: a pair of second vertical frame members extending vertically and parallel to each other, and pivotally coupled to respective upper parts of the pair of first vertical frame members, respectively; and a second cross member including two bar members, which cross each other in an X shape, and which have their respective one ends slidably supported by the pair of second vertical frame members, respectively, and have the other ends pivotally coupled to the pair of first vertical frame members, respectively.

### BRIEF DESCRIPTION OF THE DRAWINGS

Fig. 1 is a perspective view of a body frame according to an embodiment of the present invention.
Fig. 2 is a perspective view of a baby carriage according to an embodiment of the present invention.
Fig. 3 is a side view of a canopied body frame according to an embodiment of the present invention.
Fig. 4 is a side view showing a folded state of the canopied body frame according to an embodiment of the present invention.
Fig. 5 is a back view of a pair of rear legs and a back cross member.
Fig. 6 is a back view of the pair of rear legs and the back cross member in a folded state of the baby carriage.
Fig. 7 is a back view of a main part of an embodiment of the present invention.
Fig. 8 is a diagram illustrating an operation of releasing the baby carriage from an open state.
Fig. 9 is a side view showing an open state of a pushcart according to another embodiment of the present invention; and
Fig. 10 is a side view showing a folded state of the pushcart according to another embodiment of the present invention.

### DESCRIPTION OF THE PREFERRED EMBODIMENTS

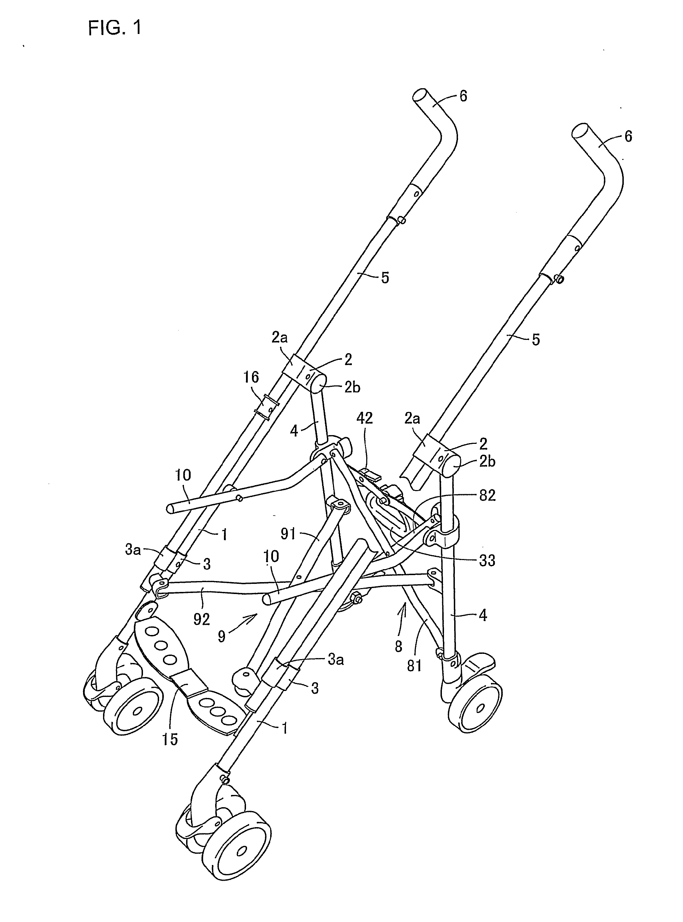

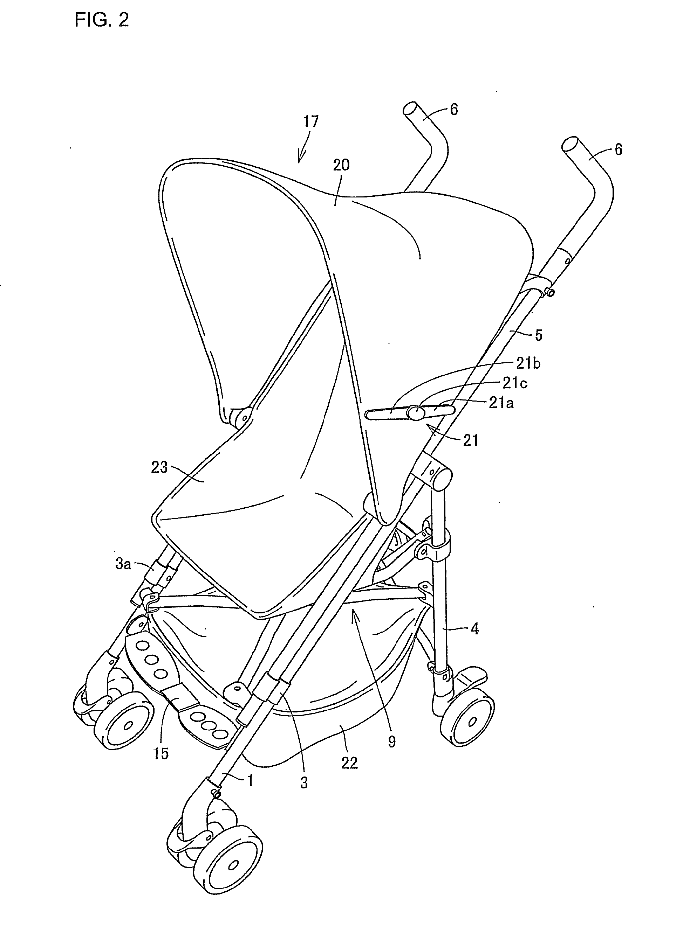

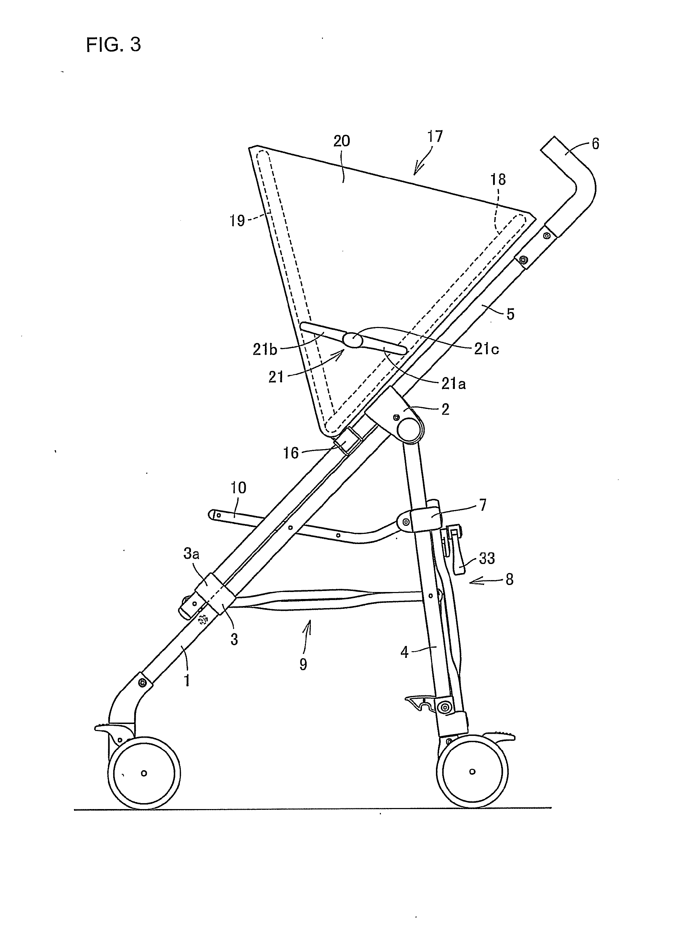

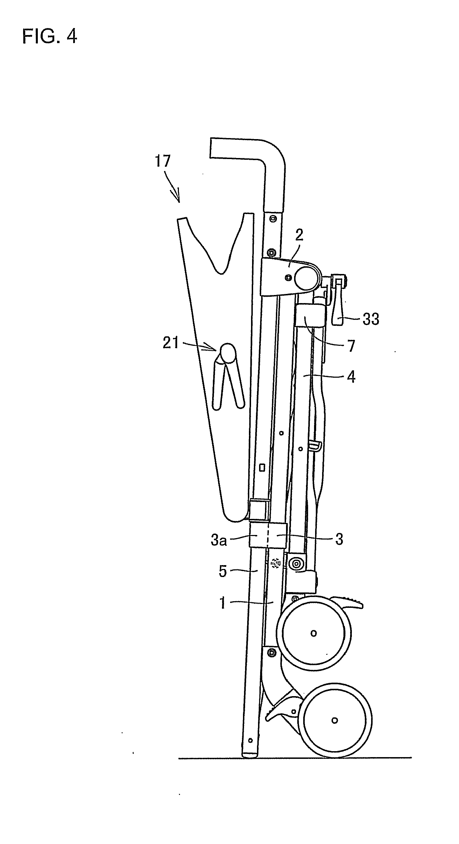

Figs. 1 to 4 show an overall structure of a foldable baby carriage as an example of a pushcart. Fig. 1 shows a body frame of the baby carriage. Fig. 2 shows the baby carriage, which has a seat hammock 23, a canopy 17, and a storage bag 22 attached thereto. Fig. 3 is a side view of the baby carriage in an open state. Fig. 4 is a side view of the baby carriage in a folded state.

The baby carriage is reduced in size in height and width directions when folded. The baby carriage includes, as main components of the body frame, a pair of front legs 1, a pair of rear legs 4, a pair of push bars 5, a pair of handle members 6, a pair of seat support bars 10, a back cross member 8, and a bottom cross member 9.

Each front leg 1 extends vertically, and has a front wheel at its lower end, and a coupling member 2 at its upper end. Each coupling member 2 is fixed to a corresponding one of the front legs 1, and has a cylindrical body 2a in its front part, and a projecting portion 2b in its rear part. A guide sleeve 3 is fixedly attached to an intermediate region of each front leg 1. Each guide sleeve 3 has a cylindrical body 3a in its front part.

Each rear leg 4 extends vertically, and has a rear wheel at its lower end. An upper end of each rear leg 4 is pivotally coupled to the projecting portion 2b of a corresponding one of the coupling members 2 that are respectively fixed to the front legs 1. As the baby carriage is folded, the rear legs 4 respectively pivot toward the front legs 1. In the folded state shown in Fig. 4, the rear legs 4 and the front legs 1 are located parallel to each other, and the rear wheels are located above the front wheels.

Each push bar 5 extends vertically so that its lower region overlaps a corresponding one of the front legs 1. Each push bar 5 is slidably held by the respective cylindrical bodies 2a, 3a of the coupling member 2 and the guide sleeve 3 which are fixed to a corresponding one of the front legs 1. As the baby carriage is folded, the push bars 5 respectively slide downwards on the front legs 1. In the folded state shown in Fig. 4, respective lower ends of the push bars 5 are in contact with the ground. The respective lower ends of the push bars 5 and the front wheels, which are in contact with the ground, enable the baby carriage to stand by itself in the folded state.

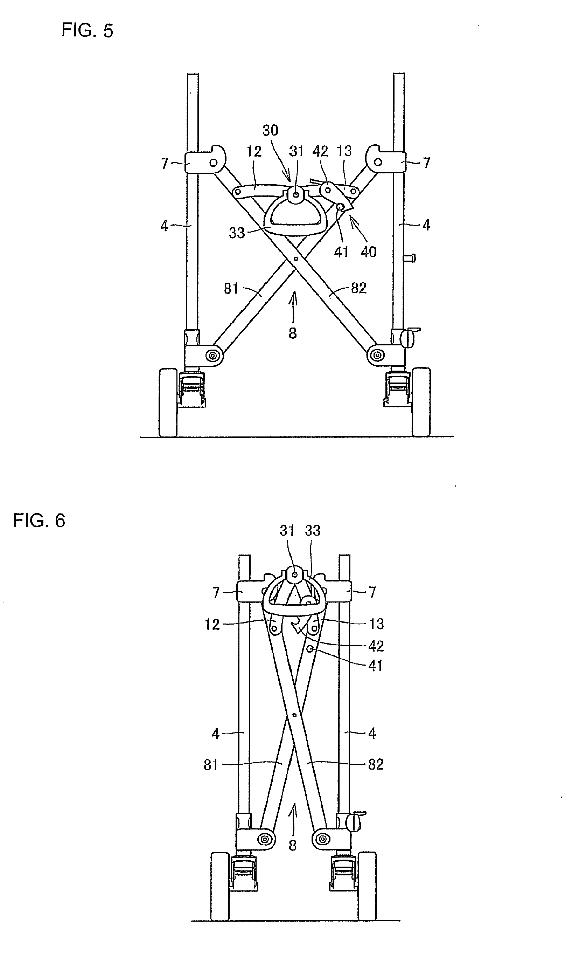

Figs. 5 and 6 are back views of the pair of rear legs 4 and the back cross member 8. Fig. 5 shows an open state of the baby carriage, and Fig. 6 shows a folded state of the baby carriage. A pair of slide members 7 are slidably disposed on respective upper regions of the pair of rear legs 4, respectively. As the baby carriage is folded, the slide members 7 respectively slide upward on the rear legs 4.

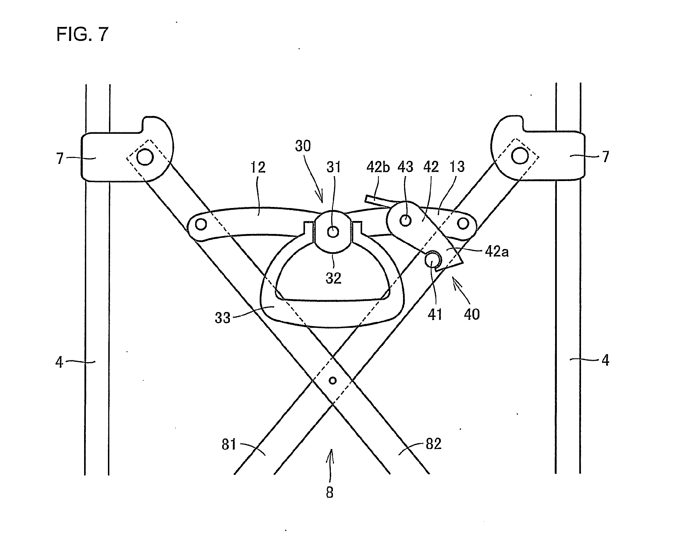

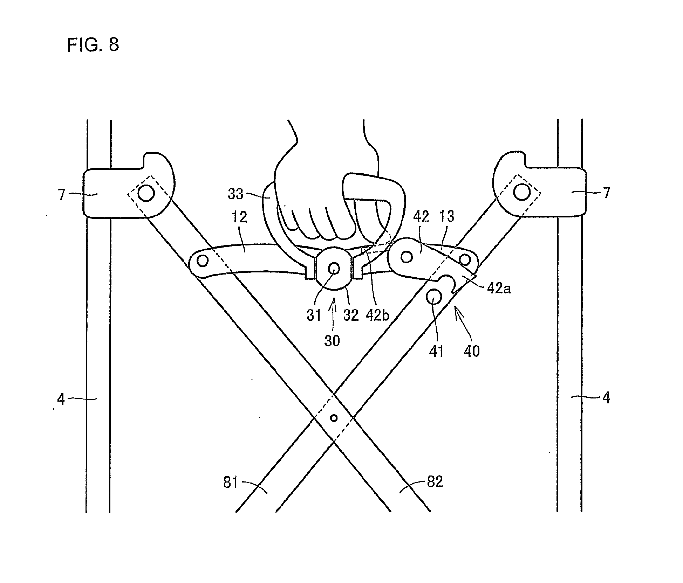

The back cross member 8 includes a first bar member 81 and a second bar member 82, which cross each other in an X shape. Respective upper ends of the first bar member 81 and the second bar member 82 are pivotally coupled to the pair of slide members 7, respectively. Respective lower ends of the first bar member 81 and the second bar member 82 are pivotally coupled to respective lower regions of the pair of rear legs 4, respectively. The first bar member 81 and the second bar member 82 are pivotally coupled together at their intersection. Comparison between Figs. 7 and 8 shows that, in the folded state of the baby carriage, the distance between upper and lower ends of the back cross member 8 is longer than that in the open state of the baby carriage, and the distance between the pair of rear legs 4 is smaller than that in the open state of the baby carriage.

As shown in Figs. 1 and 3, the bottom cross member 9 includes a first bar member 91 and a second bar member 92, which cross each other in an X shape. Respective front ends of the first bar member 91 and the second bar member 92 are pivotally coupled to the respective lower ends of the pair of push bars 5, respectively. Respective rear ends of the first bar member 91 and the second bar member 92 are pivotally coupled to respective intermediate regions of the pair of rear legs 4, respectively. As the baby carriage is folded, the pair of push bars 5 move downward along the front legs 1, and the front ends of the bottom cross member 9, which are respectively coupled to the respective lower ends of the push bars 5, also moves downward accordingly. Thus, the pair of rear legs 4 respectively coupled to the rear ends of the bottom cross member 9 are pivoted toward the front legs 1 accordingly. With an increase in amount of downward movement of the respective lower ends of the push bars 5, the distance between the front and rear ends of the bottom cross member 9 increases, and the distance between the pair of front legs 1 and the distance between the pair of rear legs 4 decrease accordingly.

The pair of seat support bars 10 extend longitudinally so as to support a seat portion of the seat hammock 23. Respective front or intermediate regions of the seat support bars 10 are pivotally coupled to the pair of front legs 1. Respective rear ends of the seat support bars 10 are pivotally coupled to the pair of slide members 7, respectively. As the baby carriage is folded, the slide members 7 respectively move upward on the rear legs 4, and the seat support bars 10 pivot counterclockwise in Fig. 3 accordingly. In the folded state of the baby carriage, the seat support members 10 are located along the inner side of the front legs 1.

As shown in Figs. 5, 6, 7, and 8, the back cross member 8 is provided with a first open-state lock mechanism 30 and a second open-state lock mechanism 40 for locking the baby carriage in an open state. As shown in the figures, the baby carriage has a first link member 13 and a second link member 12. The first link member 13 has its one end pivotally coupled to one bar member 81 of the back cross member 8. The second link member 12 has its one end pivotally coupled to the other bar member 82 of the back cross member 8, and has the other end pivotally coupled to the other end of the first link member 13 via a coupling shaft 31. The first open-state lock mechanism 30 fixes the crossing angle between the two bar members 81, 82 of the back cross member 8 by inhibiting bending between the first link member 13 and the second link member 12. The second open-state lock mechanism 40 fixes the crossing angle between the first link member 13 and one bar member 81 of the back cross member 8. The first-open state lock mechanism 30 and the second open-state lock mechanism 40 need to be unlocked in order to release (unlock) the baby carriage from the open state.

The second open-state lock mechanism 40 has a latch pin 41 fixed to one bar member 81 of the back cross member 8, and a hook 42 pivotally supported by the first link member 13 via a shaft 43. The hook 42 includes an outer part 42a extending from the shaft 43 toward the latch pin 41, and an inner part 42b extending from the shaft 43 in the direction opposite to that of the outer part 42a. The outer part 42a of the hook 42 has a latch recess that can latch onto the latch pin 41. Although not shown in the figures, biasing means, such as a spring, for biasing the hook 42 in such a direction that engages the hook 42 with the latch pin 41 may be provided. As another embodiment, instead of providing the biasing means, the hook 42 may be structured so as to be restored in the latching direction by the weight of the hook 42 itself.

In the open state of the baby carriage, the hook 42 and the latch pin 41 engage with each other, so that the crossing angle between the first link member 13 and one bar member 81 of the back cross member 8 is maintained at a fixed value. By pressing down the inner part 42b of the hook 42, the latch recess of the hook 42 is disengaged from the latch pin 41, thereby unlocking the second open-state lock mechanism 40.

The first open-state lock mechanism 30 has the coupling shaft 31 for pivotally coupling the first link member 13 and the second link member 12, and operation means for moving the coupling shaft 31 vertically. The first open-state lock mechanism 30 is locked by moving the coupling shaft 31 downward beyond a change point where the first link member 13 and the second link member 12 are linearly aligned with each other, by using the operation means. On the other hand, the first open-state lock mechanism 30 is unlocked by moving the coupling shaft 31 upward beyond the change point.

In the illustrated embodiment, the operation means includes a central member 32 for holding the coupling shaft 31, and a ring-shaped grip member 33 pivotally coupled to the central member 32, in order to facilitate the operation of moving the coupling shaft 31.

As shown in Fig. 8, when folding the baby carriage, the user holds the grip member 33 with a hand, pivots the grip member 33 upward, and presses down the inner part 42b of the hook 42 with his/her thumb while holding the grip member 33. The operation of pressing down the inner part 42b unlocks the second open-state lock mechanism 40. Then, the user further pulls the grip member 33 upward to unlock the first open-state lock mechanism 30.

As described above, in the illustrated embodiment, the operation of unlocking the first open-state lock mechanism 30 requires an operation of pulling the grip member 33 upward, and the operation of unlocking the second open-state lock mechanism 40 requires an operation of pressing down the inner part 42b of the hook 42. The structure requiring separate unlock operations for the two lock mechanisms is preferable in view of safety. Since the grip member 33 and the inner part 42b of the hook 42 are located close to each other, the respective unlock operations for the two lock mechanisms can be performed with only one hand.

As shown in Fig. 1, respective lower parts of the pair of front legs 1 are coupled together by a footrest member 15 that is bendable in the middle. In the open state of the baby carriage, the footrest member 15 extends approximately linearly along the width direction. In the folded state of the baby carriage, however, the footrest member 15 is bent in a V-shape.

As can be seen from Fig. 3, both ends of the canopy 17 in the width direction are respectively coupled to, and held by, the pair of push bars 5 at a position lower than the pair of coupling members 2. More specifically, each push bar 5 has a canopy support sleeve 16 that is fixed at a position lower than a corresponding one of the coupling members 2. The canopy 17 has canopy ribs 18, 19 pivotally held by the canopy support sleeves 16, and a canopy cloth 20 extending between the plurality of canopy ribs. In the illustrated embodiment, the canopy 17 has a dome shape, and includes the first canopy rib 18 and the second canopy rib 19. The first canopy rib 18 and the second canopy rib 19 have such a structure that, or are made of such a material that, enables the distance between the ends of each canopy rib in the width direction to be reduced when folding the baby carriage.

In the illustrated embodiment, the canopy 17 includes opening-angle fixing means 21 on its right and left sides, for fixing an opening angle between the first canopy rib 18 and the second canopy rib 19. The opening-angle fixing means 21 has a first link plate 21a, a second link plate 21b, and an operation knob 21c. One end of the first link plate 21a is coupled to the first canopy rib 18. One end of the second link plate 21b is coupled to the second canopy rib 19. The operation knob 21c is a member for moving the first and second link plates 21a, 21b to a bent position with respect to each other in order to fold the canopy 17.

Both ends of the canopy 17 are respectively supported by the canopy support sleeves 16 that are respectively fixed to the pair of push bars 5. Thus, as the baby carriage is folded, the pair of push bars 5 move downward, whereby the canopy 17 moves downward accordingly. The canopy 17 is also folded in the folded state of the baby carriage shown in Fig. 4. Thus, in the illustrated embodiment, the canopy 17 moves downward with the push bars 5 even with the canopy 17 kept attached to the body of the baby carriage. The height dimension of the baby carriage in the folded state can be reduced in this manner.

The present invention is also applicable to pushcarts, which are used in a broad sense herein to include baby carriages, load-carrying carts, and the like.

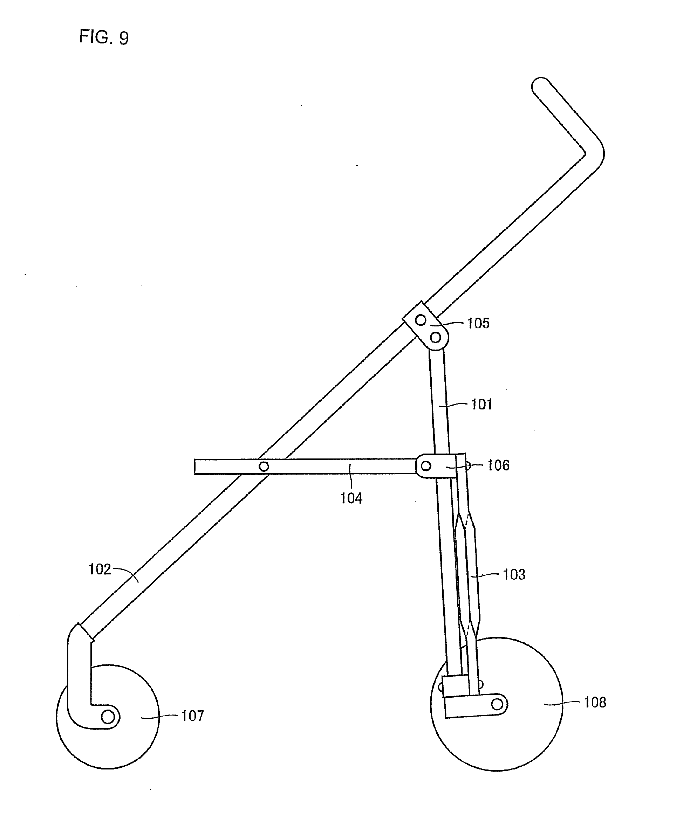

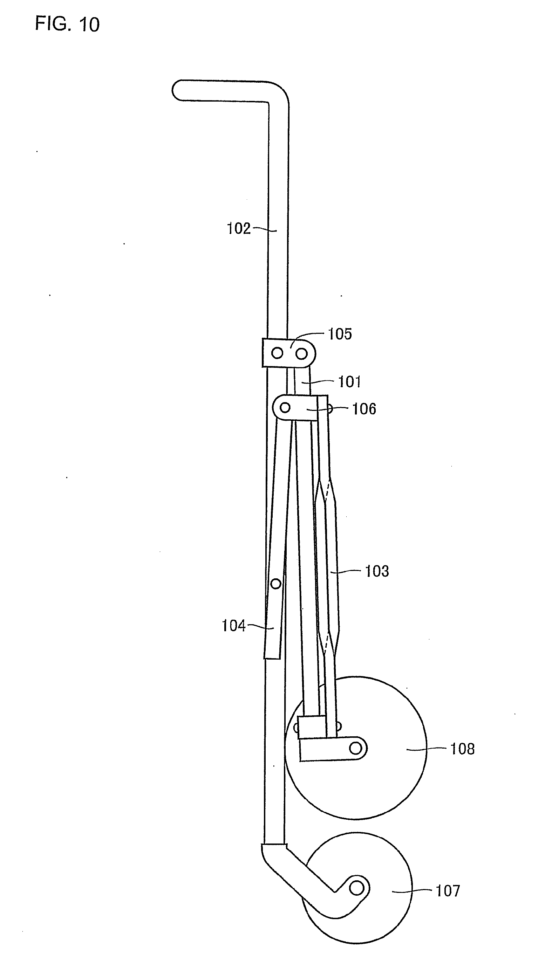

Figs. 9 and 10 are side views showing another embodiment of the present invention. Fig. 9 shows an open state of a pushcart, and Fig. 10 shows a folded state of the pushcart. The pushcart is reduced in size in longitudinal and width directions when folded.

The pushcart shown in Figs. 9 and 10 includes a pair of first vertical frame members 101, a pair of second vertical frame members 102, a first cross member 103, and a pair of side frame members 104. The pair of first vertical frame members 101 extend vertically and parallel to each other. The pair of second vertical frame members 102 extend vertically and parallel to each other, and are pivotally coupled to respective upper parts of the pair of first vertical frame members 101 via coupling members 105, respectively. Rear wheels 108 are respectively attached to respective lower ends of the first vertical frame members 101. Front wheels 107 are respectively attached to respective lower ends of the second vertical frame members 102.

As in the above embodiment, the first cross member 103 includes two bar members that cross each other in an X shape. Respective upper ends of the two bar members are slidably supported by the pair of first vertical frame members 101 via a pair of slide members 106, respectively. Respective lower ends of the two bar members are pivotally coupled to respective lower parts of the pair of first vertical frame members 101, respectively.

The pair of side frame members 104 extend longitudinally and parallel to each other. Respective one ends of the pair of side frame members 104 are pivotally coupled to the upper ends of the first cross member 103 via the pair of slide members 106, respectively. The other ends of the pair of side frame members 104 are pivotally coupled to the pair of second vertical frame members 102, respectively.

When folding the pushcart, the pushcart is operated so as to move the pair of slide members 106 upward. As the slide members 106 are moved upward, the width dimension of the first cross member 103 is reduced, and the distance between the pair of first vertical frame members 101 is reduced. Since the respective rear ends of the pair of side frame members 104 move upward with the slide members 106, respective lower parts of the pair of second vertical frame members 102 are pulled toward the respective lower parts of the pair of first vertical frame members 101 by the side frame members 104. Thus, the pushcart is reduced in size in the longitudinal and width directions in the folded state.

As in the above embodiment, the pushcart of the embodiment shown in Figs. 9 and 10 may further include a second cross member. The second cross member includes two bar members that cross each other in an X shape. Respective one ends of the two bar members are slidably supported by the pair of second vertical frame members 102, respectively, and the other ends of the two bar members are pivotally coupled to the pair of first vertical frame members 101, respectively.

As in the above embodiment, the pushcart may further include a pair of third vertical frame members. The pair of third vertical frame members extend vertically so as to partially overlap the pair of second vertical frame members 102, respectively. Respective lower ends of the pair of third vertical frame members are pivotally coupled to the second cross member. In this embodiment, when folding the pushcart, the respective lower ends of the third vertical frame members and one ends of the second cross member slide downward along the second vertical frame members 102, respectively.

As a modification of the embodiment shown in Figs. 9 and 10, the pair of side frame members 104 may be omitted, and a second cross member may be provided. The second cross member includes two bar members that cross each other in an X shape. Respective one ends of the two bar members are slidably supported by the pair of second vertical frame members 102, respectively. The other ends of the two bar members are pivotally coupled to the pair of first vertical frame members 101, respectively.

Although embodiments of the present invention are described above with reference to the figures, the present invention is not limited to the illustrated embodiments. Various modifications and variations can be made to the illustrated embodiments within the scope that is the same as, or equivalent to, the present invention.

The present invention can be advantageously used as a foldable pushcart that is reduced in size in the longitudinal and width directions when folded.

## Claims

1. A foldable pushcart that is reduced in size in longitudinal and width directions when folded, comprising:
a pair of first vertical frame members (4) extending vertically and parallel to each other on a back side of said pushcart;
a first cross member (8) including two bar members(81,82), which cross each other in an X shape, and which have their respective upper ends slidably supported by said pair of first vertical frame members, respectively, and have their respective lower ends pivotally coupled to said pair of first vertical frame members, respectively;
a first link member (13) having its one end pivotally coupled to one of said two bar members of said first cross member;
a second link member (12) having its one end pivotally coupled to the other bar member of said first cross member, and having the other end pivotally coupled to the other end of said first link member;
a first open-state lock mechanism (30) for fixing a crossing angle between said two bar members of said first cross member by inhibiting bending between said first link member and said second link member; and
a second open-state lock mechanism (40) for fixing a crossing angle between said first link member and one of said two bar members of said first cross member.

2. The foldable pushcart according to claim 1, wherein
said second open-state lock mechanism includes
a latch pin (41) fixed to one of said two bar members of said first cross member, and
a hook (42) pivotally supported by said first link member, and having a latch recess that can latch onto said latch pin.

3. The foldable pushcart according to claim 2, further comprising:
biasing means for biasing said hook in such a direction that engages said hook with said latch pin.

4. The foldable pushcart according to claim 2 or 3, wherein said hook is pivotally supported by said first link member via a shaft (43),
said hook includes an outer part (42a) that extends from said shaft toward said latch pin, and an inner part (42b) that extends from said shaft in a direction opposite to that of said outer part, and
by pressing down said inner part, said latch recess is disengaged from said latch pin, whereby said second open-state lock mechanism is unlocked.

5. The foldable pushcart according to any one of claims 1 to 4,
wherein
said first open-state lock mechanism includes
a coupling shaft (31) for pivotally coupling said first link member and said second link member, and
operation means for moving said coupling shaft vertically,
said first open-state lock mechanism is locked by moving said coupling shaft downward beyond a change point where said first link member and said second link member are linearly aligned with each other, by using said operation means, and
said first open-state lock mechanism is unlocked by moving said coupling shaft upward beyond said change point.

6. The foldable pushcart according to claim 5, wherein
said operation means includes a central member (32) for holding said coupling shaft, and a grip member (33) pivotally coupled to said central member,
said hook is pivotally supported by said first link member via a shaft,
said hook includes an outer part that extends from said shaft toward said latch pin, and an inner part that extends from said shaft in a direction opposite to that of said outer part,
by pressing down said inner part, said latch recess is disengaged from said latch pin, whereby said second open-state lock mechanism is unlocked, and
said inner part of said hook and said grip member are positioned with respect to each other so that said inner part of said hook can be pressed down with a finger of a hand holding said grip member.

7. The foldable pushcart according to any one of claims 1 to 6, further comprising:
a pair of second vertical frame members (1) extending vertically and parallel to each other, and pivotally coupled to respective upper parts of said pair of first vertical frame members, respectively; and
a pair of side frame (10) members extending longitudinally and parallel to each other, having their respective one ends pivotally coupled to said upper ends of said first cross member, respectively, and having the other ends pivotally coupled to said pair of second vertical frame members, respectively.

8. The foldable pushcart according to any one of claims 1 to 6, further comprising:
a pair of second vertical frame members extending vertically and parallel to each other, and pivotally coupled to respective upper parts of said pair of first vertical frame members, respectively; and
a second cross member (9) including two bar members (91,92), which cross each other in an X shape, and which have their respective one ends slidably supported by said pair of second vertical frame members, respectively, and have the other ends pivotally coupled to said pair of first vertical frame members, respectively.
